(19) Europäisches Patentamt
European Patent Office
Office européen des brevets

(11) EP 1 076 305 A1

(12) EUROPEAN PATENT APPLICATION

(43) Date of publication:
**14.02.2001 Bulletin 2001/07**

(51) Int Cl.$^7$: **G06F 17/30**

(21) Application number: **99610045.9**

(22) Date of filing: **13.08.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Mindpass A/S**
**9220 Aalborg (DK)**

(72) Inventors:
- **Fruensgaard, Finn Ove**
  **9000 Aalborg (DK)**
- **Kjaersgaard, Jesper**
  **9260 Gistrup (DK)**

(74) Representative: **Wittrup, Flemming et al**
**Hofman-Bang A/S,**
**Hans Bekkevolds Allé 7**
**2900 Hellerup (DK)**

# (54) A phonetic method of retrieving and presenting electronic information from large information sources, an apparatus for performing the method, a computer-readable medium, and a computer program element

(57) The invention relates to a method of retrieving and presenting electronic information from an information source, said retrieval being based on a search request consisting of one or more given search terms. A selection of a first set of related search terms is performed from a set of possible search terms, said first selection being based on the syntactic resemblance between at least one of said given search terms and said possible search terms. Said given search request is modified in accordance with said set of related search terms, and said retrieval of information is based on said modified search request. A selection of a second set of related search terms from a predefined set of possible search terms is performed in accordance with the phonetic resemblance between each of said at least one of said given search terms and the contents of said set of possible search terms. The search terms to be included in said first set of related search terms are selected from said second set of search terms.

The invention also relates to an apparatus for performing the method, to a computer-readable medium, and to a computer program element.

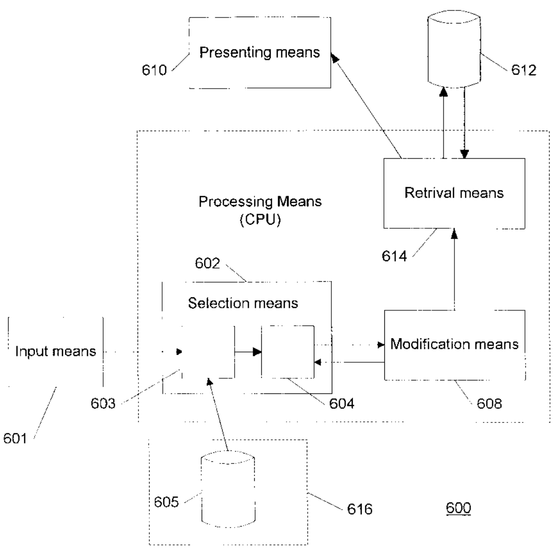


FIG. 6

EP 1 076 305 A1

## Description

The present invention relates to a method of retrieving and presenting electronic information from an information source, said retrieval being based on a search request consisting of one or more given search terms, wherein a selection of a first set of related search terms is performed from a set of possible search terms, said first selection being based on the syntactic resemblance between at least one of said given search terms and said possible search terms, and wherein said given search request is modified in accordance with said set of related search terms, and said retrieval of information is based on said modified search request.

The invention also relates to an apparatus for retrieving and presenting electronic information from an information source, said retrieval based on a given search request consisting of one or more given search terms, said apparatus including selection means which is adapted to perform a first selection of a set of related search terms from a set of possible search terms, said first selection being based on the syntactic resemblance between at least one of said given search terms and said possible search terms, and modification means adapted to modify said given search request accordance with said set of related search terms, and to base said retrieval of information on said modified search request.

The invention further relates to a computer-readable medium whose contents are adapted to cause a computer system to retrieve and present electronic information from an information source; and to a computer program element comprising computer program code means adapted to make a computer system retrieve and present electronic information from an information source.

According to the prior art it is known to retrieve electronic information from an information source such as a database and to base the retrieval on a given search request or search query. Such a search request consists of one or more search terms, e.g. alphanumeric search terms, which are normally specified by a user. When the above mentioned retrieval of information is based on a search request entered by a user, typing errors and spelling errors may occur in the specified query. As a consequence the result of the information retrieval may not be optimal and at worst it may be useless.

It is known to perform a spell check on given search terms. The spell check is performed by means of a repository including a number of correctly spelled possible search terms which can be used as search terms when retrieving information from the given information source. For example, when the information source holds information about a given technical area the predefined set of possible search terms includes terms from the given technical area. A given search term from the specified search criteria is looked up in a repository and is replaced by - or suggested to be replaced by - the term having the highest degree of syntactic resemblance with the given term. Hereby, the actual search terms to be used can be selected among the possible search terms and the influence of typing errors and spelling errors which might occur in the specified search terms can be eliminated or at least be reduced. This method, which often gives a good result, has the drawback of being cumbersome when a large set of possible search terms is used, i.e. when the predefined set of possible search terms holds a large number of search terms.

The object of the invention is to provide a method of retrieving electronic information from an information source, which on the one hand is insensitive to typing and spelling errors and on the other hand can be performed more rapidly compared to know methods. This is of major interest when searching and retrieving information from an information sources holding a large amount of different terms, e.g. the internet or one or more large databases, as known method most often cannot be applied thereto.

According to the invention these objects are achieved by a method of the above-mentioned type characterized in that a selection of a second set of related search terms from a predefined set of possible search terms is performed in accordance with the phonetic resemblance between each of said at least one of said given search terms and the contents of said set of possible search terms, and in that the search terms to be included in said first set of related search terms are selected from said second set of search terms.

The combination of phonetic- and syntactic-based selections of related search terms has been found very efficient and accurate. This is due to the fact that a phonetic selection subtracts a subset of related search terms on which a syntactic selection is applied. This has been found very efficient as these two different ways of finding related search terms supplement each other very well. The pre-processing of the given search terms prior to obtaining the information from the information source is less sensitive to spelling errors and finds relevant related search terms. When the pre-processing is performed, i.e. when one or more specified search terms have been replaced or supplemented by one or more possible search terms, the retrieval of information is performed. The retrieval has been found to give a high quality result of the information presented, i.e. information relevant to the user is retrieved and presented.

It is noted that this method is very efficient as a substantial part of the work, i.e. the computation burden, can be performed prior to the actual phonetic-based selection of the set of related search terms. Further, as the syntactic-based selection is only to be performed on this subset, the computation burden related to the actual retrieving and presenting of information from an information source is reduced significantly.

In accordance with a preferred embodiment said second selection includes the steps of:

- determining the phonetic code of a given search term, and
- selecting the related terms as the possible terms having a similar phonetic code.

In a preferred embodiment of a method according to the invention said predefined set of possible search terms includes a phonetic representation of a plurality of possible search terms. As the phonetic representation of a plurality of possible search terms - which is a cumbersome process when the set of possible search terms is large i. e. when retrieving information from an extensive information source - is hereby determined beforehand, a very efficient pre-processing of the given search request is obtained.

As a result, the method according to the invention is both insensitive to typing and spelling errors and can be performed more rapidly compared to know methods especially when retrieving information from information sources holding a large amount of information. As a consequence it is possible to increase the set of possible search terms and still obtain a rapid pre-processing of the specified search terms. Therefore it is even possible to expand the set of possible search terms as the method is scaleable, i.e. the efficiency is almost non-sensitive to expansion of the set of possible search terms. For example this is of great interest in relation to the internet which is expanded rapidly. It is noted that a similar pre-processing according to the prior art cannot be performed in an acceptable period of time to be usable in practice when retrieving information from a large information source such as the internet.

In a preferred embodiment of a method according to the invention a plurality of possible search terms in said predefined set of possible search terms is represented as one or more correctly spelled versions and as one or more incorrectly spelled versions.

Hereby, the possibility of expanding the set of possible search terms is used to make the retrieval of information less sensitive to spelling errors, i.e. typing and spelling errors, occurring in the information in the information source as well as spelling errors in the specified search terms. This is of great importance in relation to retrieving information which cannot be corrected easily, e.g. information located on the internet. Spelling errors which can normally make it impossible to retain some relevant information can now be found, if the incorrectly spelled version of the search term is included in the set of possible search terms.

Preferably, said selection of a second set of related search terms is performed as an indexed look-up in said predefined set of possible search terms. Hereby, as the terms are segmented according to their phonetic codes, the subset of terms having a given phonetic code can rapidly be found and extracted. This is mainly of interest when a plurality of the phonetic codes used are associated with more than one term.

In an expedient embodiment said selection of a first set of search terms is based on a determination of the length of the longest common sub-string between each of said at least one of said given search terms and said possible search terms.

In a preferred embodiment said retrieved information is sorted and presented in accordance to the syntactic resemblance between said specified search terms and the terms from the modified search request found in said retrieved information. In another preferred embodiment said retrieved information is sorted and presented in accordance with the phonetic resemblance between said specified search terms and the terms from the modified search request found in said retrieved information.

Hereby, when presenting the search result, the information can be sorted and information which is most likely most relevant is presented first.

Expedient embodiments of a method according to the invention are defined in claims 9 and 10.

As mentioned above, the present invention also relates to an apparatus for retrieving and presenting electronic information from an information source, said retrieval based on a given search request consisting of one or more given search terms, said apparatus including selection means which is adapted to perform a first selection of a set of related search terms from a set of possible search terms, said first selection being based on the syntactic resemblance between at least one of said given search terms and said possible search terms, and modification means adapted to modify said given search request in accordance with said set of related search terms, and to base said retrieval of information on said modified search request.

The apparatus according to the invention is characterised in that said apparatus is adapted to perform a selection of a second set of related search terms from a predefined set of possible search terms in accordance with the phonetic resemblance between each of said at least one of said given search terms and the contents of said set of possible search terms, and to select the search terms to be included in said first set of related search terms from said second set of search terms. The advantages mentioned in connection with the corresponding method according to the invention are achieved hereby.

Preferred embodiments of the apparatus are defined in claims 12-17. It is noted that the advantages mentioned in connection with the corresponding methods are achieved hereby.

Further, the invention relates to a computer-readable medium whose contents are adapted to cause a computer system to perform the method according to one or more of claims 1-10. Hereby, when a computer is caused to retrieve electronic information - as a consequence of the contents of a computer-readable medium as described above

- the advantages mentioned in connection with the corresponding method according to the invention are achieved.

Finally, the invention relates to a computer program element comprising computer program code means adapted to enable a computer system to perform the method according to one or more of claims 1-10. When a computer program element causes a computer to retrieve electronic information, as described above, the advantages mentioned in connection with the corresponding method according to the invention are achieved.

The present invention will now be described more fully with reference to the drawings, in which

Figure 1a is an example of an phonetic classification of characters in a set of characters,

Figure 1b shows a preferred embodiment of a complete phonetic classification of characters in a set of characters,

Figure 2 illustrates the generation of a phonetic repository,

Figure 3 is a flow chart of a method according to the invention,

Figure 4A illustrates a first determination of the length of the longest common sub-string between two terms,

Figure 4B illustrates a second determination of the length of the longest common sub-string between two terms,

Figure 5 illustrates a third determination of the length of the longest common sub-string between two terms using a modified method,

Figure 6 is a block diagram of an apparatus according to the invention, and

Figure 7 illustrates indexing of a set of terms in accordance with phonetic codes.

The figures are schematic and simplified for clarity, and they just show details which are essential to the understanding of the invention, while other details are left out.

In the following an example of a method and an apparatus according to the invention is given. Electronic information is obtained from an information source. The retrieval of information is based on a search request or search criteria consisting of one or more given search terms. For example, a user enters a search request consisting of one or more search terms or a key word in order to retrieve information of interest to the user, or - when searching the internet - to retrieve one or more user resource locator (URL) addresses to sites containing information of interest to the user. Like in the prior art, information which fulfils a given search request, e.g. information in which one or more specified search terms occur, is retrieved.

The retrieval of information may be performed by an apparatus, such as a computer, adapted to retrieve information from an information source such as one or more databases, a collection of electronic text documents, sites on the internet, and so on. The electronic information may be located locally - in the apparatus itself - or externally, e.g. on another computer in a computer network. The physical location of the electronic information is irrelevant in relation to the invention - as long as it can be retrieved - and therefore it will not be described in more detail in the following.

According to the invention, the search request is processed prior to the actual retrieval of information. The pre-processing of the search request includes a phonetic-based processing followed by a syntactic-based processing of one or more of the given search terms. As described below, the phonetic processing is based on a phonetic classification of the characters in a given set of characters.

Figure la is an example of a phonetic classification of the characters in a set of characters. In the example shown, each character is associated with a phonetic character code. For example, the character "c" is associated with the phonetic character code "02". Likewise, the other characters in the character set are associated with given phonetic character codes. The classification may be performed by a phonetic expert. Hereby, characters having equal or similar phonetic characteristics are given the same phonetic code. For example, as mentioned above, the character "c" is given the phonetic code "02". Likewise, the character "g" is given the phonetic code "02", as the characters "c" and "g" have been found to have similar phonetic characteristics in the given example.

By assigning a phonetic character code to each of the characters in the used set of characters, the characters are classified in accordance with the phonetic characteristics of the characters. As mentioned above, characters having the same phonetic characteristics are given the same phonetic character code. Likewise, characters having approximately the same characteristics may be given the same phonetic code or neighbouring phonetic character codes. Hereby, the characters are internally graduated and the difference between the phonetic character codes of two characters reflects the "phonetic difference", i.e. the difference in the phonetic characteristics between the characters.

In the above-mentioned example each of the characters is classified by means of a single phonetic character

code only, i.e. each character belongs to a single class. But in another embodiment one or more of the characters may be classified by means of more than one phonetic character code, i.e. a character may belong to more than one class. This may be advantageous as a character may have more than one phonetic characteristic. For example, a character may be pronounced differently in different situations, e.g. in different words, or the phonetic characteristic may vary in accordance with the neighbouring characters.

In the above-mentioned example a single table is used to illustrate the classification of characters in accordance with the phonetic characteristics. It is noted that other tables may be used as well. For example, when optimizing the selection in accordance with one or more given languages, the table used may be selected prior to a search, e.g. by specifying the language to be used.

When electronic information is to be retrieved from an information source, the given search request is preprocessed by means of a phonetic repository. The phonetic repository includes a phonetic representation of the search terms from a predetermined set of possible search terms. The generation of a phonetic representation of a given search term - which will be described in the following - is based on the phonetic character codes in the set of characters used.

Figure 1b shows a preferred embodiment of a complete phonetic classification of characters in a set of characters. A known table of a relationship between ASCII code and phonetic code is the "soundex table". The phonetic table shown on the figure is produced by expanding the standard "soundex table" in such a way that special characters like æ, ø, å, ê, é, etc. are added. The standard "soundex table" are adjusted to only one language. However, the expanded table shown is more general since it contains every letter of the alphabet (both small and capital) as well as special characters.

Figure 2 illustrates a method of pre-processing a predetermined set of possible search terms in order to form a phonetic repository. The predetermined set of possible search terms includes terms which can be used as search terms. For example, the set of possible search terms may include all the words from one or more repositories, e.g. of different languages, or a selected fraction of these words.

In a preferred embodiment of the invention the set of possible search terms includes terms which might occur in the information source to be searched for information, i.e. not necessarily correctly spelled words only. Therefore, the set of possible search terms may include terms with typing and spelling errors. Advantageously, the terms included in the set of possible search terms are found among the terms occurring in the information source, i.e. both with and without typing and spelling errors. This way of generating a set of possible search terms has been found advantageous, as searching and retrieving information based on the resulting set of possible search terms is insensitive to the given typing and spelling errors which might occur in a given search request and/or in the information which is searched.

Initially - as shown in figure 2 - step 200 is performed. Hereby, the predefined set of possible search terms is input, e.g. is read from a file or a network, or is specified by a user. In step 201, the terms from the set of possible search terms are sorted in accordance with their phonetic codes. For each of the terms in the set of possible search terms the corresponding phonetic code is determined; step 201A. The determination of the phonetic code of a given search term may be performed in the following way. Firstly, the corresponding phonetic character code of characters in the given search term is found by means of a table described in relation to Figure la. Secondly, based on the phonetic character codes of the characters, the phonetic code of the term is computed.

The phonetic code of a given search term may be found as:

$$P = \sum_{i=0}^{n-1} g^{i} \cdot p_i$$

where $g$ is the number of groups used in the classification of the characters in the used character set, $n$ is the number of characters used in the determination of the phonetic code, $P$, of the given search term, and where $p_i$ is the phonetic character codes of the i'th character used. Advantageously, $p_{n-1}$ is the leftmost, $p_{n-2}$ is the next character occurring from the left to the right, and $p_0$ is the rightmost of the characters used. It is stressed that an arbitrary number of groups may be used when performing a phonetic classification, e.g. the ten phonetic character codes 0-9. Hereby, when computing the phonetic code of a given search term, each of the used phonetic character codes appears as a digit in the resulting character code. For example, when the first four characters of a search term are used to determine the phonetic code of the search term "majonæse", the phonetic code is found to be

$$P = 10^3 . p_3 + 10^2 \cdot 7 + 10^1 \cdot p_1 + p_0 = 5732$$

Likewise, the phonetic codes of the search terms "mayonaise" and "majonet" are found to be 5732, as the

characters "y" and "j" have been given the same phonetic character code.

As an example, when the specified search term is "majonæse" and when the set of possible search terms includes the terms "majonæse", "mayonaise" and "majonet", these terms are selected as related search terms in the above-mentioned phonetic-based selection. In the following it is assumed that the set of possible search terms does not include any more search terms which fulfil the criteria to be considered a related search term, i.e. "majonæse", "mayonaise" and "majonet" are the set of related search terms so far.

Advantageously, in order to reduce the computation burden, only a given subset of the characters in a search term is used when determining the phonetic code of a given search term, e.g. a given fixed number of characters. In one embodiment a fixed number of the leading characters in a term is used while a number of selected characters may be used in another embodiment. In a preferred embodiment the characters to be used are selected using the following rule. The first character is used. The succeeding given number of characters must fulfil the following requirement in order to be used. If the last-selected character is a vowel or a consonant, the next character to be used is the first one of the succeeding characters being a consonant or a vowel, respectively.

In step 202 the terms are sorted according to their phonetic code by means of a sorting method, e.g. a known sorting method such as bubble sort, and an index is generated. Let W be the set of all words which are to be included in the directory, i.e. the predefined set of possible search terms. The indexing - which includes a segmentation of W according to the phonetic codes - is performed in the following way. For each code 0,1, ..., n-1 the corresponding sets of words $w_0$, $w_1$, ..., $w_{n-1}$ are found, i.e. a given set wi includes the set of words having the phonetic code i. For example, the Danish words "majonæse", "mayonaise", and "majonet" all share the same phonetic code, and thus they will be located in the same segment. Another segment may hold the words "Program", "Progam", "Programmer", "Programing" and "Programming". As indicated by the word "Progam" - which is an example of a misspelled version of the word "Program" - the directory may also include terms or words including typing and spelling errors, e.g. typing and spelling errors which may typically appear in the electronic information in the information source.

It is noted that in some embodiments it may be of interest to store some additional data to each word, and in this case each segment may hold words and the data which might be concatenated in the following way:

| $w_1d_1, w_2d_2, w_3d_3, w_4d_4 \ldots\ldots\ldots, w_id_i$ |
|---|

The segments are concatenates while storing the indexes of the location where new segments begin. This is illustrated in figure 7 in which an index set 701 includes a plurality of indexes, e.g. the index 702A and index 702B. The indexed 702A, 702B stores the location of a given segment 706 in the directory 708.

In order to look-up a term or word w in the directory 708, the phonetic code of the term is simply calculated and the look-up is performed using the index pointers for the i'th segment in the index array. Finally, the distance measure for each of the words in the i'th segment is applied in order to find the words that are closest to w, i.e. having the lowest 'phonetic distance' to the given word w.

If we were to find the term "majonæse" in the dictionary, we would match it against the above words using a distance measurement algorithm. We would then return the k best matches. As a result of the indexing, all the terms having a given phonetic code can be found very efficiently.

Advantageously, the determination of the phonetic codes of the terms in the predefined set of possible search terms, i.e. the generation of a phonetic repository, is performed in advance - e.g. only when the set of possible search terms is updated, or during start-up - and may be ready for use - e.g. by being loaded into the memory of the apparatus which is adapted to perform the retrieval of information - when a retrieval of information is performed. Hereby, the subsequent retrievals of information can be performed rapidly as the pre-processing according to the invention can be performed without determining the phonetic codes of the possible search terms each time.

Figure 3 illustrates a method of retrieving electronic information from an information source, e.g. a computer network, or one or more electronic databases. The retrieval is based on a given search request consisting of one or more given search terms. The search request is normally specified by a user in order to retrieve related electronic information from the information source.

As shown in step 300, when retrieving electronic information from an information source, a given search request is input, e.g. input by a user. As illustrated in step 301 in the figure, the given search request is modified prior to the actual retrieval of electronic information. The modification of the search request is performed in accordance with the phonetic resemblance between each of at least one of the given search terms and the contents of a set of possible search terms; step 301. The terms having an identical or a similar phonetic code are selected from the set of possible search terms. Based on the selected possible search terms, the given search request is modified, e.g. given search terms are replaced by the selected possible search terms, or the search request is extended by the selected search

terms. As a result the influence of typing and spelling errors in the given search request and even in the electronic information in the information source is reduced and in some cases even eliminated.

In a preferred embodiment, the above-mentioned modification - which is based on the phonetic resemblance between at least one of the given search terms and the contents of the set of possible search terms - is followed by a modification which is based on the syntactic resemblance between the given search terms and the contents of the set of possible search terms. This is illustrated by step 302 in Figure 3.

In step 302A the syntactic resemblance between the given search term and each of the related terms in the set of possible search terms, i.e. the first set which was found as a result of the phonetic-based selection mentioned above, is determined. In step 302B, a second set which is a subset of the first set is found on the basis of syntactic resemblance. As will be described below, the syntactic resemblance is determined as the longest common sub-string in accordance with a preferred embodiment of the invention.

As mentioned above the pre-processing is performed for one or more search terms. Preferably, all search terms are used but in some cases a given rule may be applied, e.g. in some cases numbers, formulas, acronyms are not pre-processed. In step 303, such a rule is used to determine whether more specified search terms are to be pre-processed according to the invention. If more search terms are to be pre-processed, steps 301 and 302 are performed. Otherwise, step 304 is performed. When all search terms are to be pre-processed, it is checked whether any of the given search terms has not been pre-processed.

In step 304, the modified search request is used for retrieving information from the information source. It is noted that the retrieval of information performed in this step may be performed using prior art methods.

In the following an example of a syntactic-based modification of a search request is given. A given specified search term is compared with the selected possible search terms which were selected on the basis of the phonetic resemblance between the search term and the predefined set of possible search terms. In a preferred embodiment the syntactic resemblance is determined as the longest common sub-string between each of said given search term and the selected possible search terms.

In step 305 the result of the retrieval may be presented to a user, i.e. retrieved information of interest to the user or - when searching the internet - one or more user resource locator (URL) addresses to sites containing information of interest to the user. In a preferred embodiment said retrieved information is sorted in accordance with the syntactic resemblance between the specified search terms and the terms from the modified search request found in the retrieved information. In another preferred embodiment said retrieved information is sorted in accordance with the phonetic resemblance between said specified search terms and the terms from the modified search request found in said retrieved information. It is noted that the information may also be sorted both in accordance with the syntactic resemblance between the specified search terms and the terms from the modified search request found in the retrieved information and with the phonetic resemblance between said specified search terms and the terms from the modified search request found in said retrieved information. Hereby, when presenting the search result, the information can be sorted and information which is most likely most relevant is presented first.

When reaching step 306, the retrieval and presentation of electronic information from an information source has been performed and a new retrieval and presentation can be performed, if desired.

Figure 4A is an example of the determination of the longest common sub-string between two terms, e.g. a given search term and a selected possible search term. In the example the Danish words "majonæse" and "mayonaise" are a given search term 401 and a possible search term 402A, respectively. The longest common sub-string between two terms 401, 402A is the longest sequence of characters which occur in the same order - but not necessarily the same character position - in both terms.

A table having a column for each character in the given search term 401, i.e. "majonæse", and having a row for each character in the possible search term 402A, i.e. "mayonaise", may be used when determining the longest common sub-string between two terms; see Figure 4A. For example, the character m in the given search term 401 is located in the column 408 while the character j in the possible search term 402A is located in the row 409. For clarity the leftmost column and the uppermost row are initialized with zeroes, and in the following the value of a given element positioned in column number x and row number y, i.e. position (x,y), is denoted VAL(x,y). The values in the remaining positions or elements in the table are determined using the following rule. If the x'th character in the given search term is identical to the y'th character in the selected possible search term, the element (x,y) is given the value VAL(x-1,y-1) +1, where VAL(x-1,y-1) is the value of the element (x-1,y-1), i.e. the value of the element positioned one element to the left and one position up in relation to the element (x,y). Otherwise, the element (x,y) is given by the value MAX {VAL(x-1,y);VAL(x,y-1) }, i.e. the maximum of the values of the element positioned one position to the left (in the same row) and the element positioned one position up (in the same column) in relation to the position (x,y), respectively. When the values of the elements are computed in accordance with the described method the lowermost rightmost element in the table holds the length of the longest common sub-string between two terms. In the given example the longest common sub-string has the length of 6 characters.

In the example, the set of selected possible search terms also includes the word "majonet" as this term was

also found to have the same or similar phonetic characteristics as the given search term. In Figure 4B the length of the longest common sub-string between the two words, i.e. between the given search term 401 ("majonæse") and the possible search term 402A ("majonet"), is determined. In this situation, the longest common sub-string also has the length of 6 characters.

Figure 5A is an example of the determination of the longest common sub-string between two terms by a modified method of determining the longest common sub-string between two terms. Again, the terms "majonæse" and "mayonaise" are a given search term 401 and a possible search term 402B, respectively. The reason of using a modified method is that the method of determining the longest common sub-string described above does not always perform optimally. For example, the syntactic distance between "majonæse" and the terms "mayonaise" and "majonet" was found to be equal. This is intuitively found to be strange as the Danish words "majonæse" and "mayonaise" are pronounced in the same way, whereas "majonæse" and "majonet" are pronounced differently.

In order to make a better selection, the syntactic-based selection may use the phonetic character codes in the following way. Instead of always giving "no match" when two characters are different in the terms being compared, i.e. not increasing the value in the given table element, the value is increased by a value between zero and one, i.e. a value between "no match" and "match". Preferably, when two different characters have been assigned the same phonetic character code, the value of the corresponding element in the table is increased by 0.5. That is, the elements of the table are updated using the same rules as mentioned above and an additional rule. The additional rule is as follows. If the x'th character in the given search term is not identical to the y'th character in the selected possible search term, the element (x,y) is given the value VAL(x-1,y-1)+v, where v is a value reflecting the phonetic resemblance between the two characters. In a preferred embodiment v can hold two values only, that is v=0.5 if the phonetic character codes of the two characters in question are equal, and v=0 if the phonetic character codes of the two characters in question are not equal. It is noted that in another embodiment v may hold a plurality of different values reflecting the difference between the phonetic character codes of the characters in more detail.

Figure 5 shows an example of the use of a modified method of determining the longest common sub-string between the two terms "majonæse" and "mayonaise". The characters "j" and "y" have the same phonetic character code. As a consequence, the resulting length of the longest common sub-string is found to be 6.5. It is noted that the determination of the length of the longest common sub-string between the terms "majonæse" and "majonet" using the modified rules results in a table equal to the table in figure 4B. Therefore, as a result, the terms "majonæse" and "mayonaise" are found to be more closely related than the terms "majonæse" and "majonet".

Figure 6 shows a block diagram of an apparatus 600 according to the invention. The apparatus is adapted to perform the method of retrieving and presenting electronic information from an information source as described above. The apparatus 600 is adapted to perform the retrieval and presentation on the basis of a given search request consisting of one or more given search terms. The given search term may be entered in the apparatus by a user using input means 601, such as a keyboard, a mouse or other input means, or be read in automatically, e.g. read from a file.

The apparatus includes selection means 602 which is adapted to perform a selection of a set of related search terms from a predefined set of possible search terms 605 in accordance with the phonetic resemblance between each of said at least one of said given search terms and the contents of said set of possible search terms. The set of possible search terms is located in the memory means 616, i.e. in RAM or in another data storage means. As described in detail above, this selection is followed by a selection based on the syntactic resemblance between at least one of said given search terms and the set of related search terms which was found in the phonetic-based selection. The phonetic-bastion and the syntactic-based selection are performed by the phonetic-based selection means 603 and the syntactic-based selection means 604, respectively. The apparatus also includes modification means 608 adapted to modify said given search request in accordance with said set of related search terms, and to base said retrieval of information on said modified search request. The retrieval is performed from the information source 612 by means of the retrieve means 614. Please note, the functionality of the apparatus corresponds to the method described earlier. Further, the apparatus 600 includes presentation means 610 which is adapted to present the result of the retrieval of electronic information, e.g. to a user. The invention also relates to a computer-readable medium whose contents are adapted to cause a computer system to perform the method described above. A medium may e.g. be a CD-ROM, a floppy disk, a Hard-disk, a DVD RAM/ROM drive, a network, etc. Further, the invention is related to a computer program element comprising program code means adapted to enable a computer system to perform the method described above.

Although a preferred embodiment of the present invention has been described and shown, the invention is not restricted thereto. It may also be embodied in other ways within the subject-matter defined in the following claims. For example, terms may also be compared by means of other syntactic and/or phonetic based methods such as:

- keyboard based algorithms reducing the influence of typing errors by taking the location of the keyboard keys into account, for example in the determination of the longest common sub-string. In one embodiment, the keyboard based algorithm may consider the location of the character keys on the keyboard, e.g. where u, i, k, m, n and h are located as neighbouring keys to the j, that is a typing error may occur when a character j is not present but the

characters u, i, k, m, n and h are.

- the known algorithms soundex, improved soundex and metaphone

## Claims

**1.** A method of retrieving and presenting electronic information from an information source, said retrieval being based on a search request consisting of one or more given search terms,

wherein a selection of a first set of related search terms is performed from a set of possible search terms, said first selection being based on the syntactic resemblance between at least one of said given search terms and said possible search terms, and

wherein said given search request is modified in accordance with said set of related search terms, and said retrieval of information is based on said modified search request

**characterized** in that

a selection of a second set of related search terms from a predefined set of possible search terms is performed in accordance with the phonetic resemblance between each of said at least one of said given search terms and the contents of said set of possible search terms,

and in that the search terms to be included in said first set of related search terms are selected from said second set of search terms.

**2.** A method according to claim 1, **characterized** in that said selection of a second set of search terms includes the steps of:

- determining the phonetic code of a given search term, and
- selecting the related terms as the possible terms having a similar phonetic code.

**3.** A method according to claim 1 or 2, **characterized** in that said predefined set of possible search terms includes a phonetic representation of a plurality of possible search terms.

**4.** A method according to one or more of claims 1-3, **characterized** in that a plurality of possible search terms in said predefined set of possible search terms is represented as one or more correctly spelled versions and as one or more incorrectly spelled versions.

**5.** A method according to one or more of claims 1-4, **characterized** in that said selection of a second set of related search terms is performed as an indexed look-up in said predefined set of possible search terms.

**6.** A method according to one or more of claims 1-5, **characterized** in that said selection of a first set of search terms is based on a determination of the length of the longest common sub-string between each of said at least one of said given search terms and said possible search terms.

**7.** A method according to one or more of claims 1-6, **characterized** in that said retrieved information is sorted and presented in accordance with the syntactic resemblance between said specified search terms and the terms from the modified search request found in said retrieved information.

**8.** A method according to one or more of claims 1-7, **characterized** in that said retrieved information is sorted and presented in accordance with the phonetic resemblance between said specified search terms and the terms from the modified search request found in said retrieved information.

**9.** A method according to one or more of claims 1-8, **characterized** in that said modification of said given search request includes an extension by one or more terms from said first set of related search terms.

**10.** A method according to one or more of claims 1-9, **characterized** in that said modification of said given search request includes a substitution of a given search term by one or more terms from said first set of related search

terms.

**11.** An apparatus for retrieving and presenting electronic information from an information source, said retrieval being based on a given search request consisting of one or more given search terms, said apparatus including.

selection means which is adapted to perform a selection of a first set of related search terms from a set of possible search terms, said first selection being based on the syntactic resemblance between at least one of said given search terms and said possible search terms, and

modification means adapted to modify said given search request in accordance with said set of related search terms, and to base said retrieval of information on said modified search request

**characterized** in that

said apparatus is adapted to perform a selection of a second set of related search terms from a predefined set of possible search terms in accordance with the phonetic resemblance between each of said at least one of said given search terms and the contents of said set of possible search terms, and to

select the search terms to be included in said first set of related search terms from said second set of search terms.

**12.** An apparatus according to claim 11, **characterized** in that said selection means adapted to perform said selection of a second set of search terms is adapted to perform the steps of:

- determining the phonetic code of a given search term, and
- selecting the related terms as the possible terms having a similar phonetic code.

**13.** An apparatus according to claim 11 or 12, **characterized** in that said predefined set of possible search terms includes a phonetic representation of a plurality of possible search terms.

**14.** An apparatus according to one or more of claims 11-13, **characterized** in that a plurality of possible search terms in said predefined set of possible search terms is represented as one or more correctly spelled versions and as one or more incorrectly spelled versions.

**15.** A method according to one or more of claims 11-14, **characterized** in that said selection means adapted to perform said second set of related search terms is adapted to select said second set of related search terms as an indexed look-up in said predefined set of possible search terms.

**16.** An apparatus according to one or more of claims 11-15, **characterized** in that said apparatus includes presenting means adapted to sort and present said retrieved information in accordance with the syntactic resemblance between said specified search terms and the terms from the modified search request found in said retrieved information.

**17.** A method according to one or more of claims 11-16, **characterized** in that said apparatus includes presenting means adapted to sort and present said retrieved information in accordance with the phonetic resemblance between said specified search terms and the terms from the modified search request found in said retrieved information.

**18.** A computer-readable medium whose contents are adapted to cause a computer system to perform the method according to one or more of claims 1-10.

**19.** A computer program element comprising computer program code means adapted to enable a computer system to perform the method according to one or more of claims 1-10.

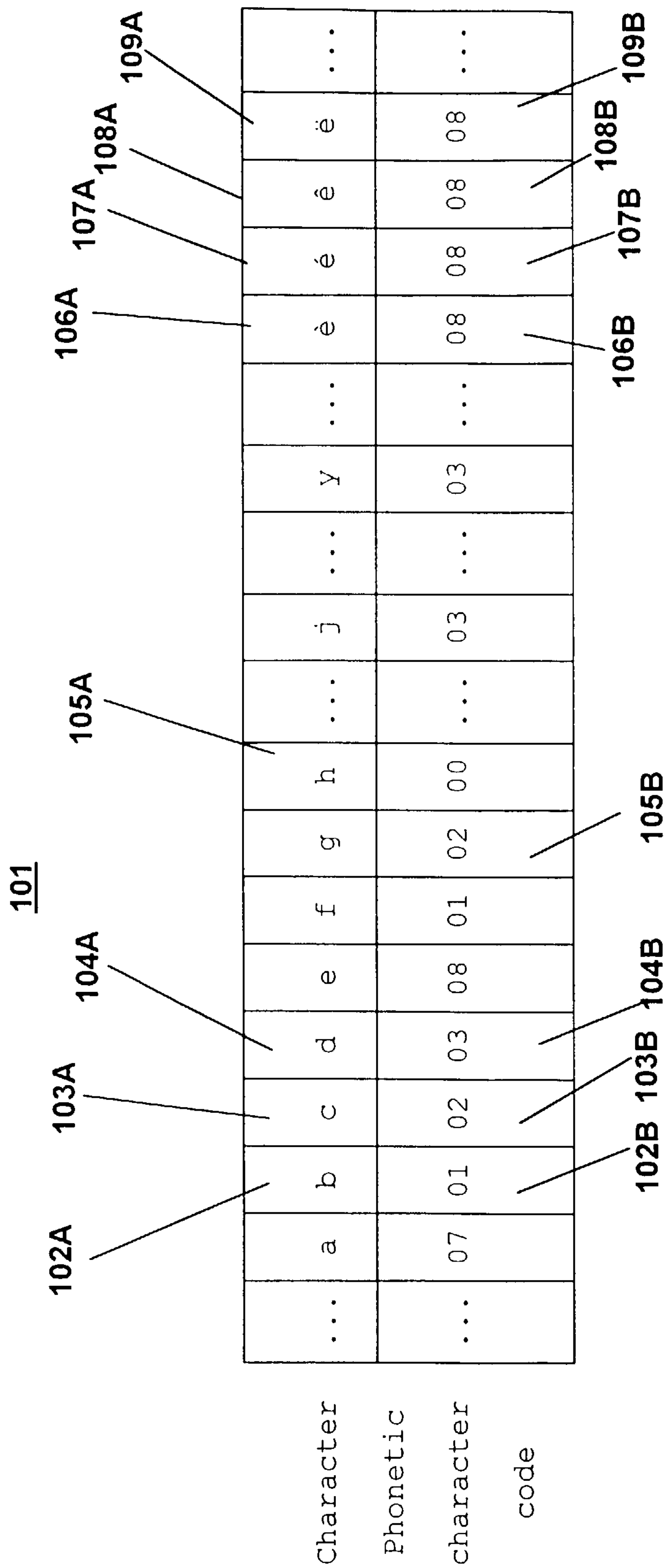

101
Character
Phonetic character code
...
a
07
b
01
c
02
d
03
e
08
f
01
g
02
h
00
j
03
y
03
è
08
é
08
ê
08
ë
08
102A
103A
104A
105A
106A
107A
108A
109A
102B
103B
104B
105B
106B
107B
108B
109B


FIG. 1a

| Ascii code | Phonetics code table related to the Ascii table | | | | | | | | | | Ascii table | | | | | | | | | |
|---|---|---|---|---|---|---|---|---|---|---|---|---|---|---|---|---|---|---|---|---|
| 0-9 | | | | | | | | | | | | | | | | | | | | |
| 10-19 | | | | | | | | | | | | | | | | | | | | |
| 20-29 | | | | | | | | | | | | | | | | | | | | |
| 30-39 | | | | | | | | | | | | | | ! | " | # | $ | % | & | ' |
| 40-49 | | | | | | | | | | | ( | ) | * | + | , | - | . | / | 0 | 1 |
| 50-59 | | | | | | | | | | | 2 | 3 | 4 | 5 | 6 | 7 | 8 | 9 | : | ; |
| 60-69 | | | | | | | | | | | < | = | > | ? | @ | A | B | C | D | E |
| 70-79 | | | | | | | | | | | F | G | H | I | J | K | L | M | N | O |
| 80-89 | | | | | | | | | | | P | Q | R | S | T | U | V | W | X | Y |
| 90-99 | | | | | | | | 7 | 1 | 2 | Z | [ | \ | ] | ^ | _ | ` | a | b | c |
| 100-109 | 3 | 8 | 1 | 2 | | 9 | 2 | 2 | 4 | 5 | d | e | f | g | h | i | j | k | l | m |
| 110-119 | 5 | 10 | 1 | 2 | 6 | 2 | 3 | 10 | 1 | 1 | n | o | p | q | r | s | t | u | v | w |
| 120-129 | 2 | 11 | 2 | | | | | | | | x | y | z | { | \| | } | ~ | | □ | |
| 130-139 | | | | | | | | | | | ‚ | ƒ | „ | … | † | ‡ | ˆ | ‰ | Š | ‹ |
| 140-149 | | | | | | | | | | | Œ | | Ž | | | ‘ | ’ | “ | ” | • |
| 150-159 | | | | | | | 7 | | | 11 | – | — | ˜ | ™ | š | › | œ | | ž | Ÿ |
| 160-169 | | | | | | | | | | | | ¡ | ¢ | £ | ¤ | ¥ | ¦ | § | ¨ | © |
| 170-179 | | | | | | | | | | | ª | « | ¬ | - | ® | ¯ | ° | ± | ² | ³ |
| 180-189 | | | | | | | | | | | ´ | µ | ¶ | · | ¸ | ¹ | º | » | ¼ | ½ |
| 190-199 | | | | | | | | | | 2 | ¾ | ¿ | À | Á | Â | Ã | Ä | Å | Æ | Ç |
| 200-209 | | | | | | | | | 5 | | È | É | Ê | Ë | Ì | Í | Î | Ï | Ð | Ñ |
| 210-219 | | | | | | | | | | | Ò | Ó | Ô | Õ | Ö | × | Ø | Ù | Ú | Û |
| 220-229 | | | | 2 | | | | | | | Ü | Ý | Þ | ß | à | á | â | ã | ä | å |
| 230-239 | 7 | 2 | 8 | 8 | 8 | 8 | 9 | 9 | 9 | 9 | æ | ç | è | é | ê | ë | ì | í | î | ï |
| 240-249 | | 5 | | 10 | 10 | 10 | | | 10 | | ð | ñ | ò | ó | ô | õ | ö | ÷ | ø | ù |
| 250-255 | 10 | 10 | 10 | 11 | | | | | | | ú | û | ü | ý | þ | ÿ | | | | |

FIG. 1b

| Phonetic codes | Phonetic groups |
|---|---|
| 1 | b, f, p, v, w |
| 2 | c, g, j, k, q, s, x, z, Ç, ß, ç |
| 3 | d, t |
| 4 | l |
| 5 | m, n, Ð, ñ |
| 6 | r |
| 7 | a, œ, æ |
| 8 | e, è, é, ê, ë |
| 9 | i, ì, í, î, ï |
| 10 | o, u, ó, ô, õ, ø, ú, û, ü |
| 11 | y, Ÿ, ý |

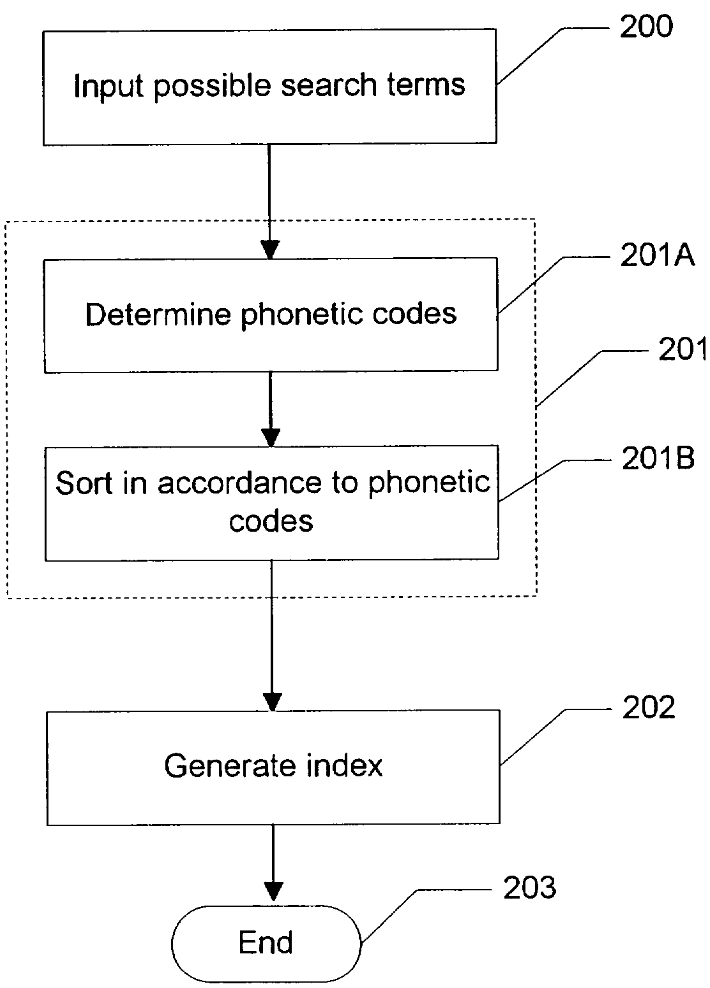
Input possible search terms
200
Determine phonetic codes
201A
201
Sort in accordance to phonetic codes
201B
Generate index
202
End
203

FIG. 2

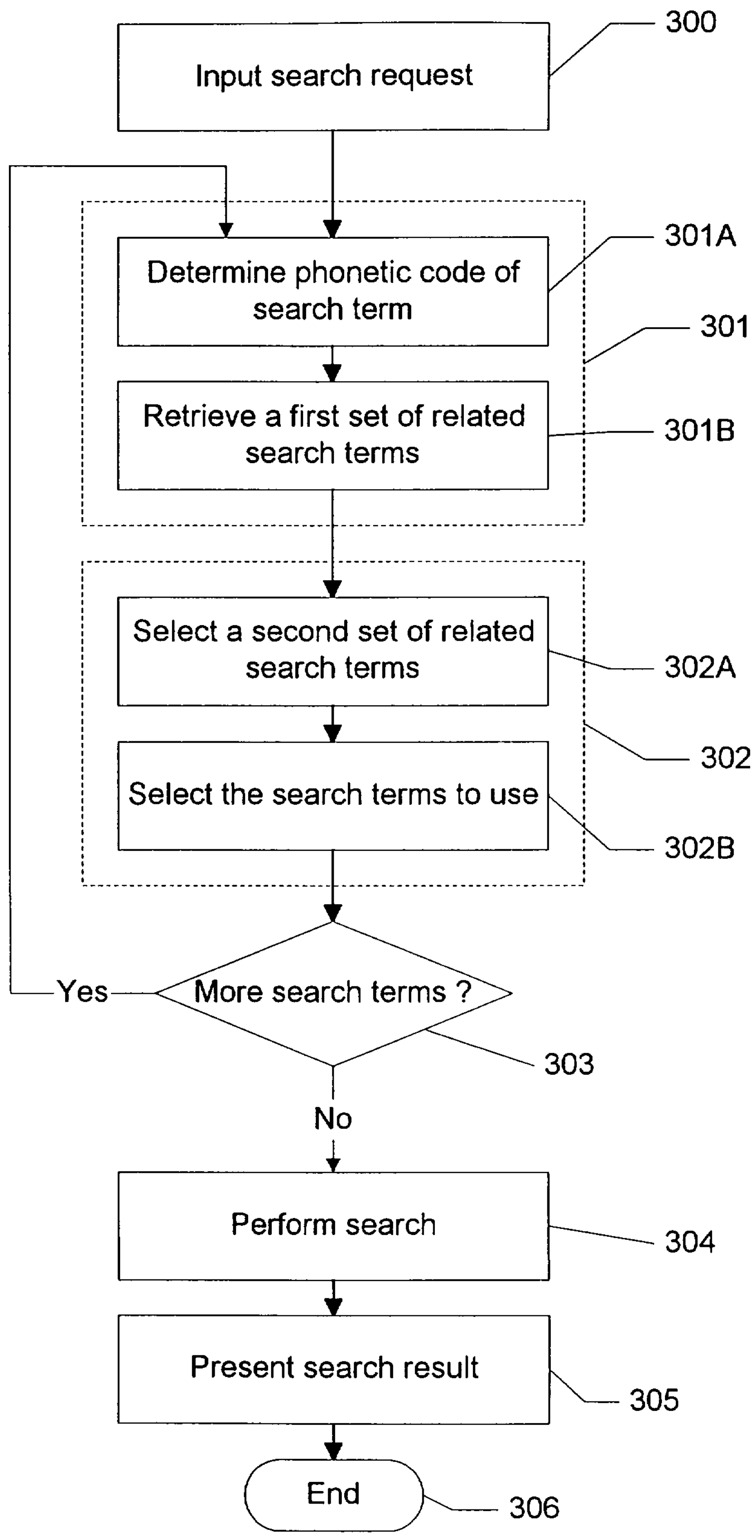
Input search request
300
Determine phonetic code of search term
301A
301
Retrieve a first set of related search terms
301B
Select a second set of related search terms
302A
302
Select the search terms to use
302B
Yes
More search terms ?
303
No
Perform search
304
Present search result
305
End
306

FIG. 3

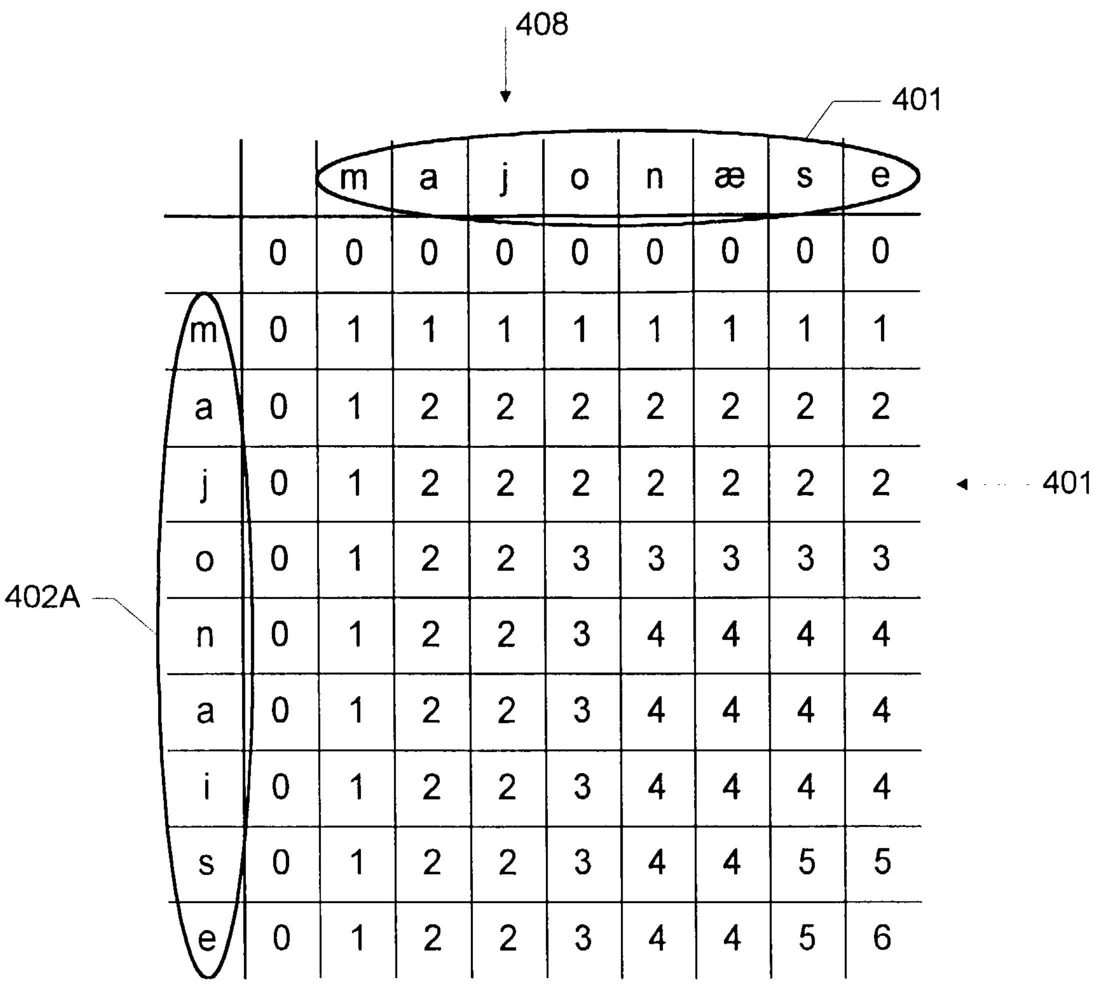
408
401
m a j o n æ s e
0 0 0 0 0 0 0 0 0
m 0 1 1 1 1 1 1 1 1
a 0 1 2 2 2 2 2 2 2
j 0 1 2 2 2 2 2 2 2
o 0 1 2 2 3 3 3 3 3
n 0 1 2 2 3 4 4 4 4
a 0 1 2 2 3 4 4 4 4
i 0 1 2 2 3 4 4 4 4
s 0 1 2 2 3 4 4 5 5
e 0 1 2 2 3 4 4 5 6
401
402A

FIG. 4A

401

| | | m | a | j | o | n | æ | s | e |
|---|---|---|---|---|---|---|---|---|---|
| | 0 | 0 | 0 | 0 | 0 | 0 | 0 | 0 | 0 |
| m | 0 | 1 | 1 | 1 | 1 | 1 | 1 | 1 | 1 |
| a | 0 | 1 | 2 | 2 | 2 | 2 | 2 | 2 | 2 |
| j | 0 | 1 | 2 | 3 | 3 | 3 | 3 | 3 | 3 |
| o | 0 | 1 | 2 | 3 | 4 | 4 | 4 | 4 | 4 |
| n | 0 | 1 | 2 | 3 | 4 | 5 | 5 | 5 | 5 |
| e | 0 | 1 | 2 | 3 | 4 | 5 | 5 | 5 | 6 |
| t | 0 | 1 | 2 | 3 | 4 | 5 | 5 | 5 | 6 |

402B

FIG. 4B

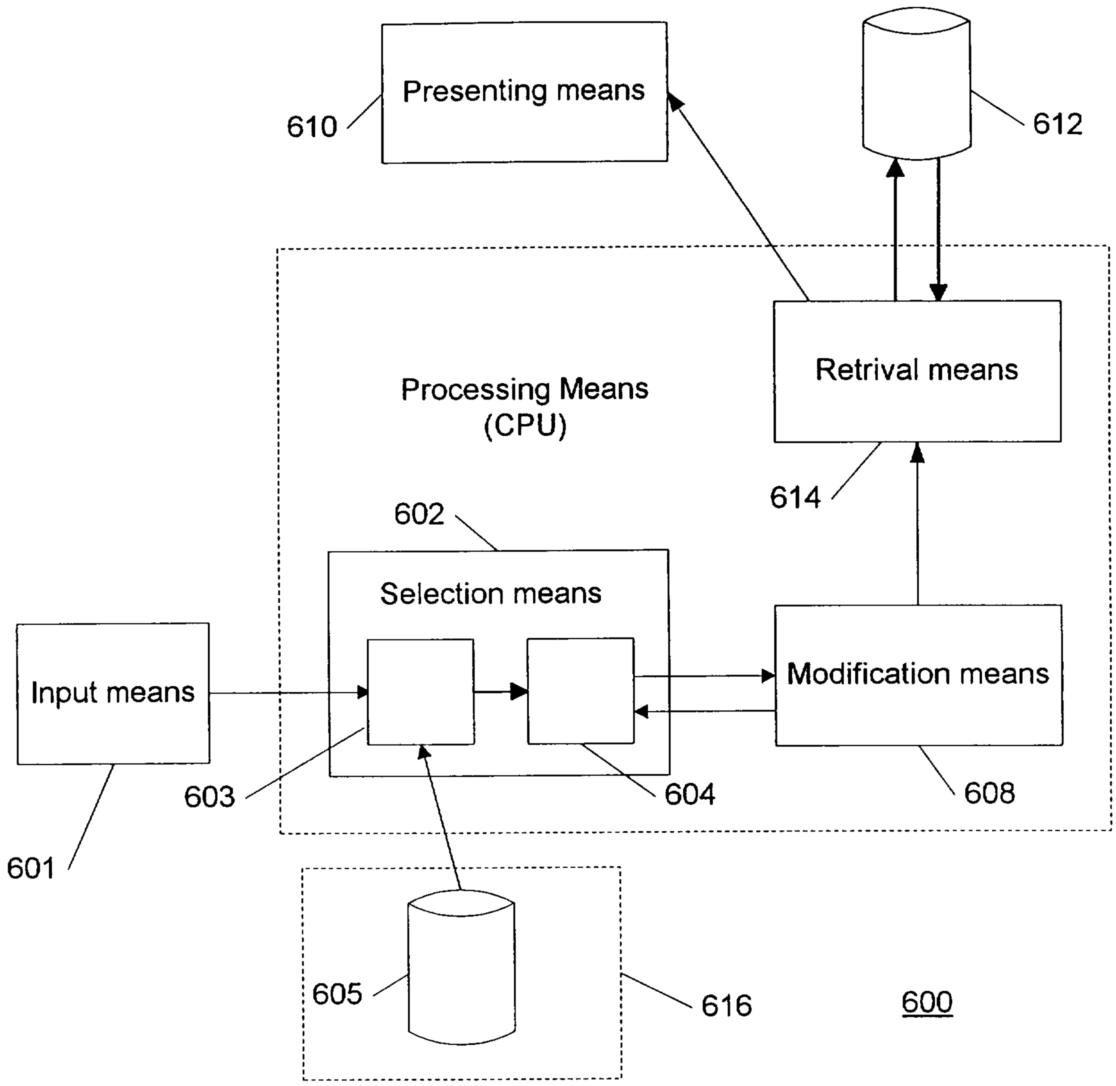
Presenting means
610
612
Processing Means
(CPU)
Retrival means
614
602
Selection means
Input means
Modification means
603
604
608
601
605
616
600

FIG. 6

401

| | | m | a | j | o | n | æ | s | e |
|---|---|---|---|---|---|---|---|---|---|
| | 0 | 0 | 0 | 0 | 0 | 0 | 0 | 0 | 0 |
| m | 0 | 1 | 1 | 1 | 1 | 1 | 1 | 1 | 1 |
| a | 0 | 1 | 2 | 2 | 2 | 2 | 2 | 2 | 2 |
| j | 0 | 1 | 2 | 2,5 | 2,5 | 2,5 | 2,5 | 2,5 | 2,5 |
| o | 0 | 1 | 2 | 2,5 | 3,5 | 3,5 | 3,5 | 3,5 | 3,5 |
| n | 0 | 1 | 2 | 2,5 | 3,5 | 4,5 | 4,5 | 4,5 | 4,5 |
| a | 0 | 1 | 2 | 2,5 | 3,5 | 4,5 | 4,5 | 4,5 | 4,5 |
| i | 0 | 1 | 2 | 2,5 | 3,5 | 4,5 | 4,5 | 4,5 | 4,5 |
| s | 0 | 1 | 2 | 2,5 | 3,5 | 4,5 | 4,5 | 5,5 | 5,5 |
| e | 0 | 1 | 2 | 2,5 | 3,5 | 4,5 | 4,5 | 5,5 | 6,5 |

402A

FIG. 5

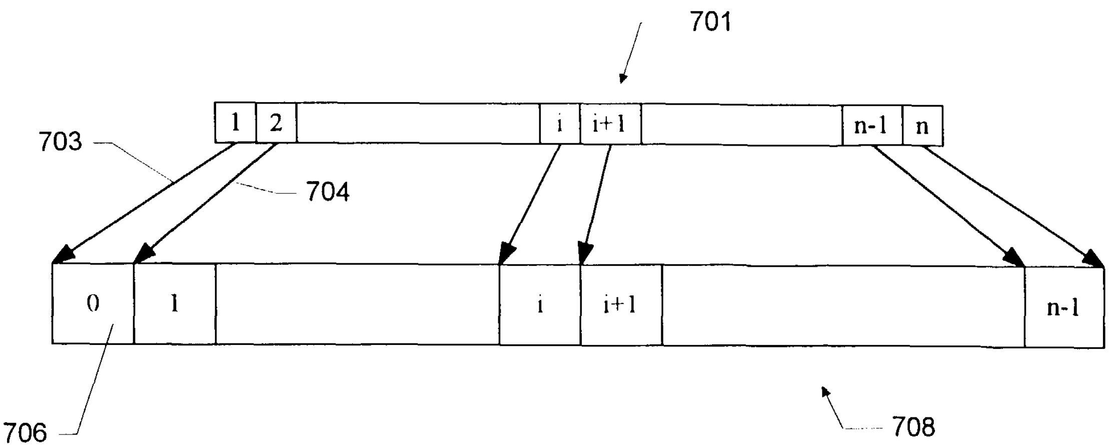


FIG. 7

European Patent Office

# EUROPEAN SEARCH REPORT

Application Number
EP 99 61 0045

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PFEIFER U ET AL: "RETRIEVAL EFFECTIVENESS OF PROPER NAME SEARCH METHODS" INFORMATION PROCESSING & MANAGEMENT (INCORPORATING INFORMATION TECHNOLOGY),GB,PERGAMON PRESS INC. OXFORD, vol. 32, no. 6, 1 November 1996 (1996-11-01), pages 667-679, XP000633362 ISSN: 0306-4573 * abstract * * page 667, line 1 - page 671, line 35 * --- | 1-19 | G06F17/30 |
| X | BRYANT J H: "USPTO's automated trademark search system" WORLD PATENT INFORMATION, 1987, USA, vol. 9, no. 1, pages 5-9, XP002129624 ISSN: 0172-2190 * abstract * * page 7, column 1, line 1 - page 9, column 1, line 6 * --- | 1-19 | |
| X | US 4 833 610 A (ZAMORA ANTONIO ET AL) 23 May 1989 (1989-05-23) * abstract * * column 1, line 1 - column 2, line 53 * --- | 1-19 | TECHNICAL FIELDS SEARCHED (Int.Cl.7)<br>G06F |
| A | "Amazing base (Approach 2.0 database)" PC USER, 2-15 DEC. 1992, UK, no. 199, pages 54-55, XP002129625 ISSN: 0263-5720 * the whole document * --- -/-- | 1-19 | |

The present search report has been drawn up for all claims

| Place of search | Date of completion of the search | Examiner |
|---|---|---|
| THE HAGUE | 3 February 2000 | Katerbau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 99 61 0045

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ZOBEL J ET AL: "FINDING APPROXIMATE MATCHES IN LARGE LEXICONS" SOFTWARE PRACTICE & EXPERIENCE,GB,JOHN WILEY & SONS LTD. CHICHESTER, vol. 25, no. 3, 1 March 1995 (1995-03-01), pages 331-345, XP000579815 ISSN: 0038-0644 * the whole document * ----- | 1-19 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 3 February 2000 | Katerbau, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 61 0045

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2000

| Patent document cited in search report | Publication date | Patent family member(s) | Publication date |
|---|---|---|---|
| US 4833610 A | 23-05-1989 | DE 3751359 D | 27-07-1995 |
| | | EP 0271664 A | 22-06-1988 |
| | | JP 1763632 C | 28-05-1993 |
| | | JP 4054261 B | 28-08-1992 |
| | | JP 63157262 A | 30-06-1988 |

EPO FORM P0459

For more details about this annex : see Official Journal of the European Patent Office, No. 12/82